# EUROPEAN PATENT APPLICATION

(11) **EP 4 681 838 A1**
(43) Date of publication of application: **21.01.2026**
(21) Application number: 24788481.0
(22) Date of filing: 08.03.2024
(51) Int. Cl.: B21D 53/08, F28D 1/053, F28F 1/02, F28F 1/30, F28F 1/32

(54) **METHOD FOR MANUFACTURING HEAT EXCHANGER**

(30) Priority: 10.04.2023 JP 2023063225
(71) Applicant: DAIKIN INDUSTRIES, LTD., Osaka-Shi, Osaka 530-0001 (JP)
(72) Inventor: SAKAI Kohei, Osaka-shi, Osaka 530-0001 (JP); MATOBA Yoshiaki, Osaka-shi, Osaka 530-0001 (JP); ODA Takaya, Osaka-shi, Osaka 530-0001 (JP); SHIMIZU Motofumi, Osaka-shi, Osaka 530-0001 (JP)
(74) Representative: Hoffmann Eitle
(86) International application number: PCT/JP2024/009086
(87) International publication number: WO 2024/214451

(57) **Abstract**

In a method for manufacturing a heat exchanger (10), a first step, a second step, and a third step are conducted. In the first step, a first fin group (41) and flat tubes (20) are assembled into a first assembly (50). In the second step, a second fin group (42) and flat tubes (20) are assembled into a second assembly (55). In the third step, the first assembly (50) and the second assembly (55) are assembled together. As a result, the first fin group (41) and the second fin group (42) are assembled with the flat tubes (20).

## Description

### TECHNICAL FIELD

The present disclosure relates to a method for manufacturing a heat exchanger.

### BACKGROUND ART

Patent Document 1 discloses a heat exchanger including flat-shaped heat transfer tubes (flat tubes) and plate-shaped fins. In this heat exchanger, each of the heat transfer tubes arranged vertically has a windward portion inserted into corresponding flat grooves of the upstream flat plate fins, and a leeward portion inserted into corresponding flat grooves of the downstream flat plate fins.

### CITATION LIST

### PATENT DOCUMENT

Patent Document 1: Japanese Unexamined Patent Publication No. H03-128167

### SUMMARY OF THE INVENTION

### TECHNICAL PROBLEM

As described above, Patent Document 1 discloses a heat exchanger having a structure in which fin groups are individually arranged on the windward side and the leeward side of the flat tubes. Unfortunately, a specific method for manufacturing a heat exchanger with such a structure has not been thoroughly studied.

It is an object of the present disclosure to manufacture a heat exchanger including flat tubes and two fin groups.

### SOLUTION TO THE PROBLEM

A first aspect of the present disclosure is directed to a method for manufacturing a heat exchanger (10). The heat exchanger (10) includes multiple flat tubes (20), and a first fin group (41) and a second fin group (42) that each include multiple plate-shaped fins (30). The fins (30) each have multiple slots (32) with open ends (33) at an edge of the fin (30). The flat tubes (20) are each inserted into corresponding ones of the slots (32) of the fins (30) that form the first fin group (41) and corresponding ones of the slots (32) of the fins (30) that form the second fin group (42).

The manufacturing method according to the first aspect includes: a first step of inserting some of the flat tubes (20) into some corresponding ones of the slots (32) of the fins (30) that form the first fin group (41) to form a first assembly (50) including the first fin group (41) and the some of the flat tubes (20); a second step of inserting other ones of the flat tubes (20) into some of the slots (32) of the fins (30) which form the second fin group (42) which correspond to the slots (32) of the first fin group (41) into each of which no flat tube (20) is inserted to form a second assembly (55) including the second fin group (42) and the other ones of the flat tubes (20); and a third step of orienting the first assembly (50) such that the flat tubes (20) of the first assembly (50) face the second assembly (55), orienting the second assembly (55) such that the flat tubes (20) of the second assembly (55) face the first assembly (50), and pressing the first assembly (50) against the second assembly (55) to insert the flat tubes (20) of the first assembly (50) into the slots (32) of the fins (30) of the second assembly (55) and to insert the flat tubes (20) of the second assembly (55) into the slots (32) of the fins (30) of the first assembly (50).

In the manufacturing method of the first aspect, the first step, the second step, and the third step are conducted. In the first step, the first fin group (41) and the flat tubes (20) are assembled into the first assembly (50). In the second step, the second fin group (42) and the flat tubes (20) are assembled into the second assembly (55). In the third step, the flat tubes (20) of the first assembly (50) are inserted into the slots (32) of the fins (30) of the second assembly (55), and the flat tubes (20) of the second assembly (55) are inserted into the slots (32) of the fins (30) of the first assembly (50). As a result, the flat tubes (20), the first fin group (41), and the second fin group (42) are assembled together.

A second aspect of the present disclosure is an embodiment of the first aspect. In the second aspect, in the first step, the flat tubes (20) are inserted into predetermined ones of the slots (32) of the fins (30) that form the first fin group (41) such that the slots (32) into each of which a corresponding one of the flat tubes (20) has been inserted and the slots (32) into each of which no flat tube (20) is inserted are alternately arranged, and in the second step, the flat tubes (20) are inserted into predetermined ones of the slots (32) of the fins (30) that form the second fin group (42) such that the slots (32) into each of which a corresponding one of the flat tubes (20) has been inserted and the slots (32) into each of which no flat tube (20) is inserted are alternately arranged.

According to the second aspect, in each of the first fin group (41) that forms the first assembly (50) and the second fin group (42) that forms the second assembly (55), the slots (32) into each of which the corresponding flat tube (20) has been inserted and the slots (32) into each of which no flat tube (20) is inserted are alternately arranged. In the third step, the flat tubes (20) of the second assembly (55) are inserted into the slots (32) of the first fin group (41) into each of which no flat tube (20) has been inserted in the first step. In the third step, the flat tubes (20) of the first assembly (50) are inserted into the slots (32) of the second fin group (42) into each of which no flat tube (20) has been inserted in the second step.

A third aspect of the present disclosure is an embodiment of the first or second aspect. In the third aspect, in the third step, the first assembly (50) is oriented such that the flat tubes (20) are located on a lower side of the first assembly (50), the second assembly (55) is oriented such that the flat tubes (20) are located on an upper side of the second assembly (55), and the first assembly (50) is moved downward to press the first assembly (50) against the second assembly (55).

In the third step of the third aspect, moving the first assembly (50) downward allows the first assembly (50) and the second assembly (55) to be assembled together. In this process, the flat tubes (20) of the second assembly (55) are inserted from below into the slots (32) of the first fin group (41), and the flat tubes (20) of the first assembly (50) are inserted from above into the slots (32) of the second fin group (42).

A fourth aspect of the present disclosure is an embodiment of the third aspect. In the fourth aspect, in the third step, a pressing member (65) having a lower surface that forms a flat pressing surface (66) is used to bring the pressing surface (66) of the pressing member (65) into contact with upper edges of the fins (30) of the first assembly (50) oriented such that the flat tubes (20) are located on the lower side of the first assembly (50), and the first assembly (50) is thereby pushed downward by the pressing member (65) to press the first assembly (50) against the second assembly (55).

In the third step of the fourth aspect, the pressing member (65) pushing the first assembly (50) downward allows the first assembly (50) and the second assembly (55) to be assembled together.

A fifth aspect of the present disclosure is an embodiment of the fourth aspect. In the fifth aspect, the pressing member (65) for use in the third step includes multiple pressing blocks (67) each having a lower surface that forms the pressing surface (66).

In the third step of the fifth aspect, the first assembly (50) is pushed downward by the pressing member (65) including the pressing blocks (67).

A seventh aspect of the present disclosure is an embodiment of the first or second aspect. In the sixth aspect, the third step includes a correction step of correcting a deflection in the first assembly (50) oriented such that the flat tubes (20) are located on a lower side of the first assembly (50), and in the third step, the first assembly (50) in which a deflection has been corrected is pressed against the second assembly (55).

In the third step of the sixth aspect, the first assembly (50) in which a deflection has been corrected is assembled with the second assembly (55). This can reduce the possibility that the flat tubes (20) may crush the fins (30) in the process of inserting the flat tubes (20) of the first assembly (50) into the corresponding slots (32) of the fins (30) that form the second fin group (42) of the second assembly (55) and inserting the flat tubes (20) of the second assembly (55) into the corresponding slots (32) of the fins (30) that form the first fin group (41) of the first assembly (50).

A seventh aspect of the present disclosure is an embodiment of the sixth aspect. In the seventh aspect, the correction step includes a first correction step of correcting a horizontal deflection in the first assembly (50) by clamping the first assembly (50) in a horizontal direction.

In the first correction step of the seventh aspect, the horizontal deflection in the first assembly (50) oriented such that the flat tubes (20) are located on the lower side thereof is corrected.

An eighth aspect of the present disclosure is an embodiment of the seventh aspect. In the eighth aspect, in the first correction step of the correction step, the first assembly (50) is clamped from both sides of the first assembly (50) in a direction of arrangement of the flat tubes (20), and is clamped from both sides of the first assembly (50) in a direction of arrangement of the fins (30).

In the first correction step of the eighth aspect, the first assembly (50) is clamped from both sides thereof in the direction of arrangement of the flat tubes (20) and from both sides thereof in the direction of arrangement of the fins (30). As a result, a horizontal deflection in the first assembly (50) oriented such that the flat tubes (20) are located on the lower side thereof is corrected.

A ninth aspect of the present disclosure is an embodiment of any one of the sixth to eighth aspects. In the ninth aspect, in the third step, a pressing member (65) having a lower surface that forms a flat pressing surface (66) is used to bring the pressing surface (66) of the pressing member (65) into contact with upper edges of the fins (30) of the first assembly (50) oriented such that the flat tubes (20) are located on the lower side of the first assembly (50), and the first assembly (50) is thereby pushed downward by the pressing member (65) to press the first assembly (50) against the second assembly (55), and the correction step includes a second correction step of correcting a vertical deflection in the first assembly (50) by pressing the first assembly (50) against the pressing surface (66) of the pressing member (65).

In the third step of the ninth aspect, the pressing member (65) pushing the first assembly (50) downward allows the first assembly (50) and the second assembly (55) to be assembled together. In the second correction step, the first assembly (50) is pressed against the pressing surface (66) of the pressing member (65). As a result, a vertical deflection in the first assembly (50) oriented such that the flat tubes (20) are located on the lower side thereof is corrected.

A tenth aspect of the present disclosure is an embodiment of the ninth aspect. In the tenth aspect, in the second correction step of the correction step, both end portions of the flat tubes (20) of the first assembly (50) are lifted to press the first assembly (50) against the pressing surface (66) of the pressing member (65).

In the second correction step of the tenth aspect, both end portions of each flat tube (20) of the first assembly (50) are lifted. As a result, the first assembly (50) is pressed against the pressing surface (66) of the pressing member (65), and the vertical deflection in the first assembly (50) is corrected.

An eleventh aspect of the present disclosure is an embodiment of the ninth aspect. In the eleventh aspect, in the second correction step of the correction step, both end portions of the flat tubes (20) of the first assembly (50) and intermediate portions of the flat tubes (20) in a direction of extension of the flat tubes (20) are lifted to press the first assembly (50) against the pressing surface (66) of the pressing member (65).

In the second correction step of the eleventh aspect, both end portions of each flat tube (20) of the first assembly (50) and the intermediate portion of each flat tube (20) in the direction of extension of the flat tubes (20) are lifted. As a result, the first assembly (50) is pressed against the pressing surface (66) of the pressing member (65), and the vertical deflection in the first assembly (50) is corrected.

### BRIEF DESCRIPTION OF THE DRAWINGS

[FIG. 1] FIG. 1 is a front view of a heat exchanger.
[FIG. 2] FIG. 2 is a cross-sectional view of the heat exchanger taken along line A-A in FIG. 1.
[FIG. 3] FIG. 3 is a plan view of a fin.
[FIG. 4] FIG. 4 is a flowchart showing a method for manufacturing a heat exchanger.
[FIG. 5] FIG. 5 is a schematic perspective view of a first fin group in a first step or a second fin group in a second step.
[FIG. 6] FIG. 6 is a front view of the first fin group and flat tubes in the first step or the second fin group and the flat tubes in the second step.
[FIG. 7] FIG. 7 is a schematic perspective view of a first assembly formed in the first step or a second assembly formed in the second step.
[FIG. 8] FIG. 8 is a front view of the first assembly formed in the first step or the second assembly formed in the second step.
[FIG. 9] FIG. 9 is a front view of the first assembly illustrating the process of inversion in an inversion step.
[FIG. 10] FIG. 10 is a cross-sectional view taken along line C-C in FIG. 14 in a third step.
[FIG. 11] FIG. 11 is a plan view of the first assembly and a pressing member in the third step.
[FIG. 12] FIG. 12 is a plan view of the first assembly and clamping members in the third step.
[FIG. 13] FIG. 13 is a plan view of the first assembly and the clamping members in a first correction step.
[FIG. 14] FIG. 14 is a cross-sectional view taken along line B-B in FIG. 13 in the first correction step.
[FIG. 15] FIG. 15 is a cross-sectional view taken along line B-B in FIG. 13 in a second correction step.
[FIG. 16] FIG. 16 is a cross-sectional view of the process of moving the first assembly downward in the third step and corresponding to FIG. 10.
[FIG. 17] FIG. 17 is a cross-sectional view of the first assembly and the second assembly during the third step and corresponding to FIG. 10.
[FIG. 18] FIG. 18 is a cross-sectional view of a state where the first assembly and the second assembly have been assembled together in the third step and corresponding to FIG. 10.
[FIG. 19] FIG. 19 is a plan view of a first variation of an embodiment and corresponding to FIG. 11.
[FIG. 20] FIG. 20 is a cross-sectional view of a second variation of the embodiment and corresponding to FIG. 14.
[FIG. 21] FIG. 21 is a cross-sectional view of a third variation of the embodiment and corresponding to FIG. 10.

### DESCRIPTION OF EMBODIMENTS

Embodiments will be described. This embodiment is directed to a method for manufacturing a heat exchanger (10).

### -Heat Exchanger-

The heat exchanger (10) manufactured by a manufacturing method of this embodiment will be described. This heat exchanger (10) is provided in a refrigerant circuit of an air conditioner that performs a refrigeration cycle, and causes a refrigerant flowing through the refrigerant circuit to exchange heat with air.

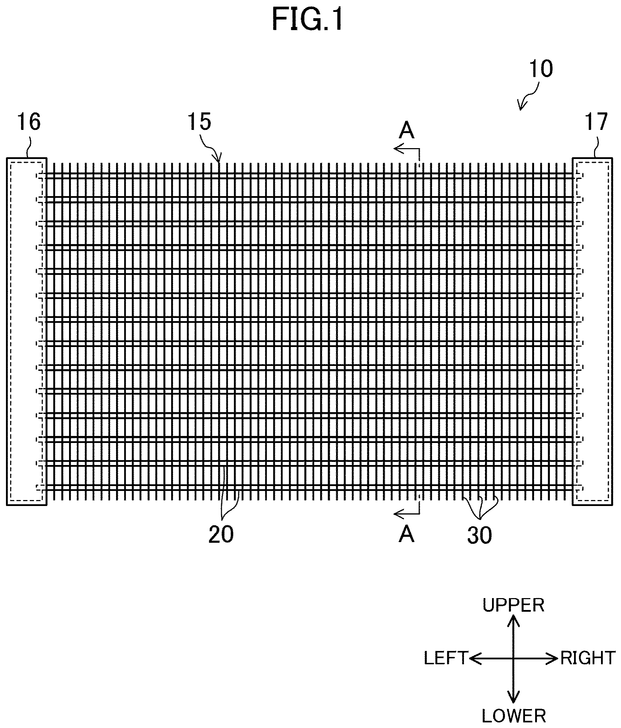

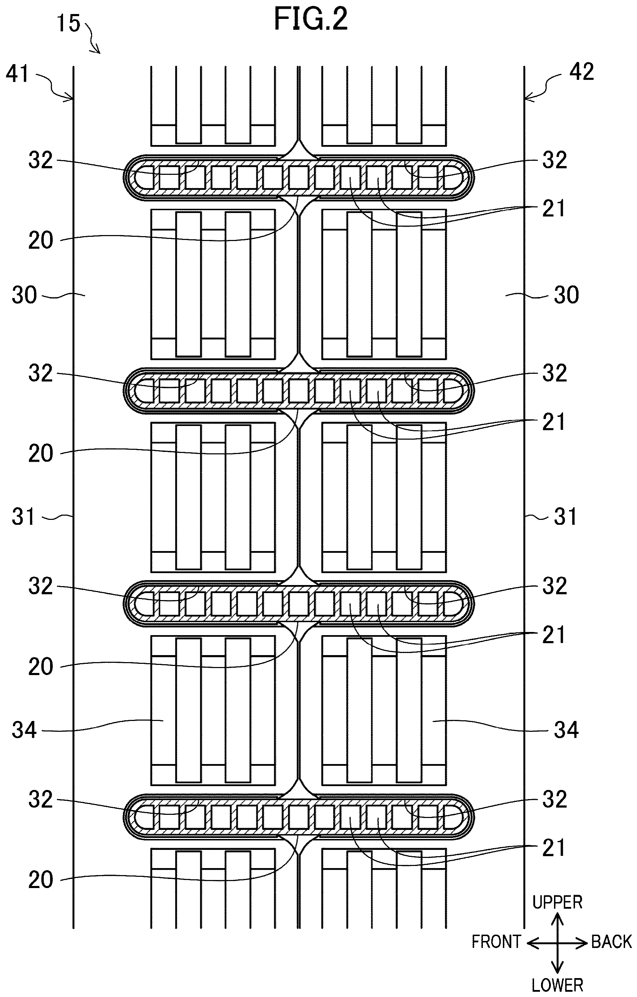

As shown in FIGS. 1 and 2, the heat exchanger (10) includes one core (15) and two first header collecting pipes (16, 17). The core (15) includes multiple flat tubes (20) and multiple fins (30). The flat tubes (20), the fins (30), and the header collecting pipes (16, 17) are all made of aluminum or an aluminum alloy.

### <Header Collecting Pipe>

Each of the two header collecting pipes (16, 17) is an elongated tubular member. The shape and structure of the header collecting pipes (16, 17) shown here are merely examples. In the heat exchanger (10) shown in FIG. 1, a first header collecting pipe (16) is disposed on the left side of the core (15), and a second header collecting pipe (17) is disposed on the right side of the core (15).

### <Flat Tube>

As shown in FIG. 2, each of the flat tubes (20) is a flat-shaped tube whose width is greater than its thickness. The flat tube (20) has a rectangular shape with rounded corners or an elliptic shape with both arc-shaped ends, in a cross section taken in a direction orthogonal to a direction of extension of the flat tube (20).

As shown in FIG. 1, the flat tubes (20) of the core (15) are arranged such that their direction of extension (axial direction) generally coincides with the horizontal direction, and side surfaces thereof extending along the width direction face each other. Further, the flat tubes (20) are arranged one above another in an up-down direction at regular intervals from one another.

One ends of the flat tubes (20) that form the core (15) are inserted into the first header collecting pipe (16), and the other ends thereof into the second header collecting pipe (17). The header collecting pipes (16, 17) are joined to the flat tubes (20) by brazing.

As shown in FIG. 2, the flat tubes (20) each have multiple flow paths (21). The flow paths (21) are straight flow paths extending along the direction of extension of the flat tubes (20). In each of the flat tubes (20), the flow paths (21) are arranged in the width direction of the flat tubes (20). The flow paths (21) open at both end faces of the flat tube (20). The flow paths (21) communicate with the internal spaces of the header collecting pipes (16, 17).

### <Fin>

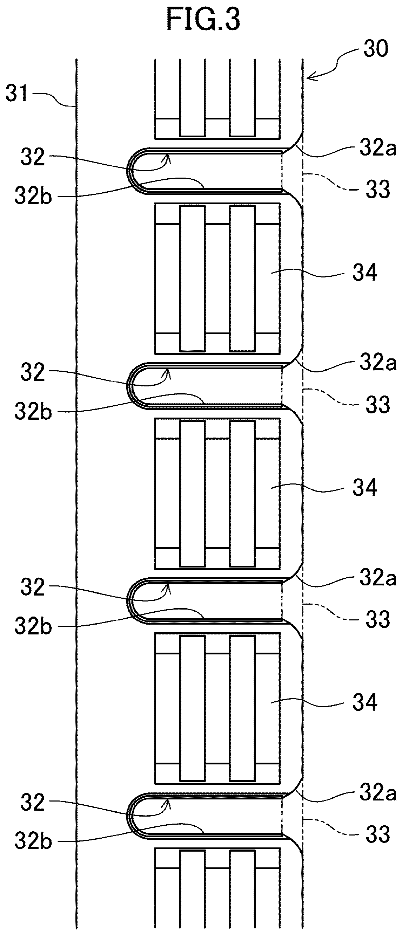

As shown in FIG. 3, the fins (30) are each an elongated plate-shaped member. The fin (30) has one long side forming a linear continuous edge (31) that is continuous from one end to the other end of the fin in the longitudinal direction.

The fin (30) has multiple slots (32). The slots (32) are elongated cut-outs into each of which the corresponding flat tube (20) is to be inserted. The slots (32) extend in the short-side direction of the fin (30) (in a direction orthogonal to the continuous edge (31)). The slots (32) open at an edge of the fin (30). In other words, the slots (32) each have an open end (33) at the edge of the fin (30). Specifically, the slots (32) open at the other long side of the fin (30) (in other words, the long side thereof opposite to the continuous edge (31)).

The slots (32) of each fin (30) are formed at regular intervals in the long-side direction of the fin (30) (in a direction parallel to the continuous edge (31)). The number of slots (32) formed in each fin (30) is the same as the number of flat tubes (20) that form the core (15).

The slots (32) are each divided into a tube introduction portion (32a) and a tube holding portion (32b). The tube introduction portion (32a) is a portion continuous with the open end (33). The width of the tube introduction portion (32a) (the length in the direction parallel to the continuous edge (31)) increases gradually toward the open end (33). The tube holding portion (32b) is an elongated portion extending in the short-side direction of the fin (30). The width of the tube holding portion (32b) (the length in the direction parallel to the continuous edge (31)) is substantially constant. The width of the tube holding portion (32b) is slightly less than the thickness of the flat tube (20).

A portion of each fin (30) between adjacent slots (32) has a cut and raised portion (34) for enhancing heat transfer.

The shape of the fins (30) that form a first fin group (41) and the shape of the fins (30) that form a second fin group (42) may be the same or different. For example, the cut and raised portions (34) of the fins (30) that form the first fin group (41) may have a different shape from the cut and raised portions (34) of the fins (30) that form the second fin group (42).

### <Core>

As shown in FIGS. 1 and 2, the core (15) includes the flat tubes (20), the first fin group (41), and the second fin group (42).

Each of the first fin group (41) and the second fin group (42) includes the fins (30). The number of fins (30) that form the fin group (41) is desirably the same as the number of fins (30) that form the fin group (42), but may be different therefrom. The fins (30) of the fin group (41) are arranged to face and are spaced apart from the fins (30) of the fin group (42) at regular intervals. In each of the fin groups (41, 42), corresponding ones of the slots (32) of the fins (30) are aligned together in the direction of arrangement of the fins (30).

The first fin group (41) is disposed on the front side of the flat tubes (20) in FIG. 2. The fins (30) that form the first fin group (41) are oriented such that their continuous edges (31) face forward and the open ends (33) of their slots (32) face backward. Front portions of the flat tubes (20) each enter corresponding ones of the slots (32) of the fins (30) that form the first fin group (41). The fins (30) that form the first fin group (41) are joined to the flat tubes (20) by brazing.

The second fin group (42) is disposed on the back side of the flat tubes (20) in FIG. 2. The fins (30) that form the second fin group (42) are oriented such that the open ends (33) of their slots (32) face forward and their continuous edges (31) face backward. Back portions of the flat tubes (20) each enter corresponding ones of the slots (32) of the fins (30) that form the second fin group (42). The fins (30) that form the second fin group (42) are joined to the flat tubes (20) by brazing.

### -Method for Manufacturing Heat Exchanger-

A method for manufacturing the heat exchanger (10) with the above-described structure will be described. The method for manufacturing a heat exchanger (10) of this embodiment includes: a core assembly step, a header attachment step, and a joining step conducted in this order.

The core assembly step is the step of assembling the flat tubes (20), the first fin group (41), and the second fin group (42) into the core (15). The core assembly step will be described in detail later.

The header attachment step is the step of attaching a first header collecting pipe (16) and a second header collecting pipe (17) to the core (15) formed in the core assembly step. In the header attachment step, one end of each of the flat tubes (20) that form the core (15) is inserted into the first header collecting pipe (16), and the other end of each of the flat tubes (20) that form the core (15) into the second header collecting pipe (17).

The joining step is the step of joining the fins (30) and the header collecting pipes (16, 17) to the flat tubes (20) by brazing. In the joining step, the core (15) to which the header collecting pipes (16, 17) have been attached is housed in a heating furnace or any other similar space and heated. As a result, a brazing filler metal is molten, and the fins (30) and the header collecting pipes (16, 17) are joined to the flat tubes (20).

### -Core Assembly Step-

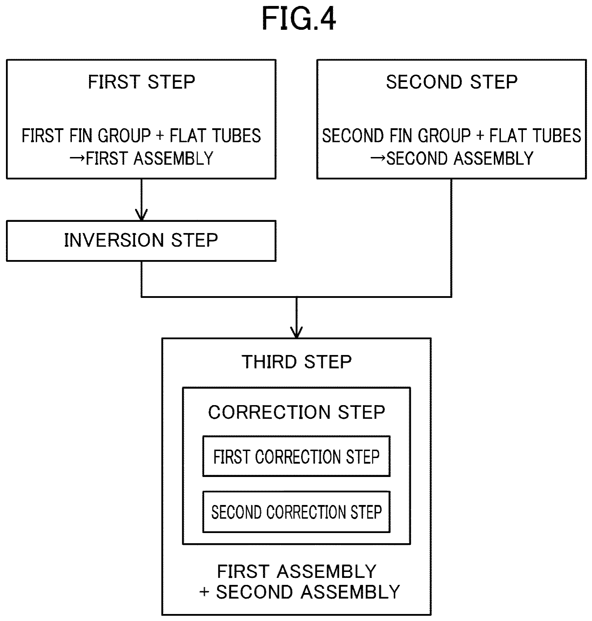

As shown in FIG. 4, in the core assembly step, a first step, an inversion step, a second step, and a third step are conducted. The third step is conducted after the first step and the second step. The inversion step is conducted between the first step and the third step. In the third step, a correction step is conducted. In the correction step, a first correction step and a second correction step are conducted.

### <First Step>

The first step is the step of assembling the first fin group (41) and the flat tubes (20) into a first assembly (50).

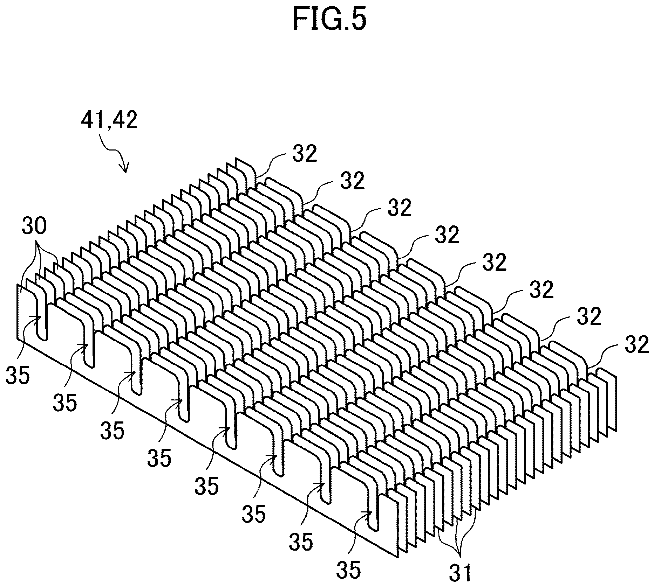

As shown in FIG. 5, in the first step, all of the fins (30) that form the first fin group (41) face, and are spaced apart from each other at regular intervals. In FIG. 5, the cut and raised portions (34) of the fins (30) are not shown. The fins (30) are oriented such that their continuous edges (31) face downward, and the open ends (33) of their slots (32) face upward. The fins (30) are arranged such that corresponding ones of the slots (32) are aligned in the direction of arrangement of the fins (30). The fins (30) that form the first fin group (41) are surrounded by a frame-shaped or tray-shaped member to maintain the orientation shown in FIG. 5.

In the first fin group (41) in the state shown in FIG. 5, the aligned slots (32) of the fins (30) form a slot row (35). The number of slot rows (35) of the first fin group (41) in this state is the same as the number of slots (32) in each fin (30).

In the first step, some of the flat tubes (20) that form the heat exchanger (10) are assembled with the first fin group (41). In the first step of this embodiment, half of the flat tubes (20) that form the heat exchanger (10) are assembled with the first fin group (41).

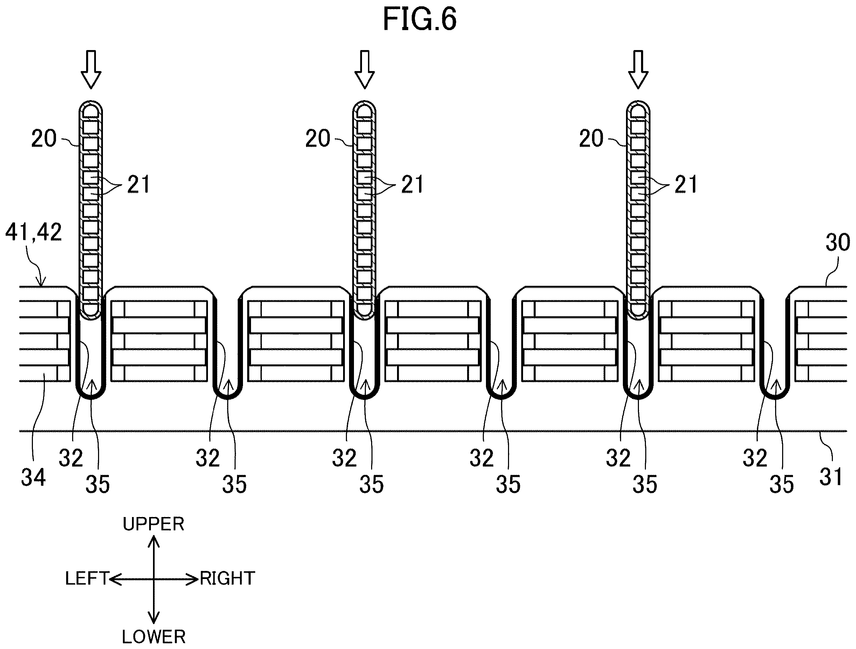

As shown in FIG. 6, in the first step, the flat tubes (20) are inserted into every other one of the slot rows (35) arranged in the longitudinal direction of the fins (30) (in other words, in the direction of extension of the continuous edges (31)). In the first step, the flat tubes (20) are inserted into some of the slot rows (35) of the first fin group (41). Thus, in the first step, the flat tubes (20) are inserted into some of the slots (32) of each of the fins (30) that form the first fin group (41).

The flat tubes (20) are each inserted downward from above into corresponding ones of the slots (32) that form the corresponding slot row (35) such that the width direction of the flat tubes (20) generally coincides with the vertical direction and the direction of extension of the flat tubes (20) is along the direction of arrangement of the fins (30).

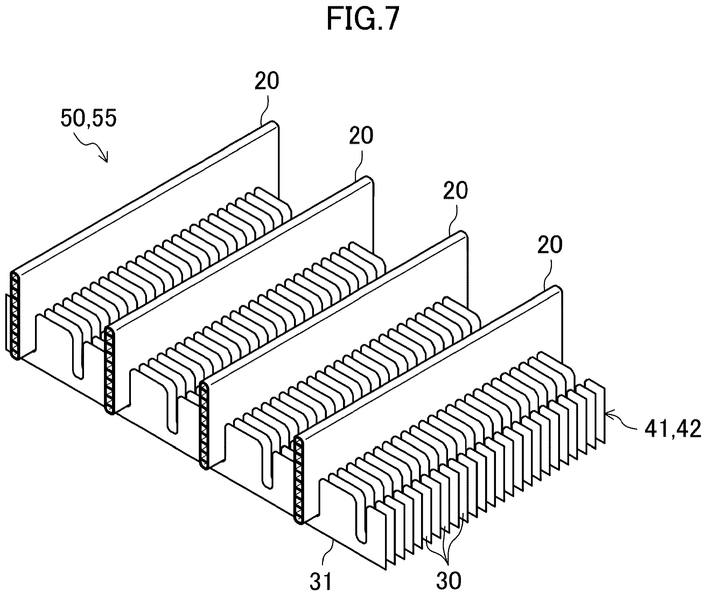

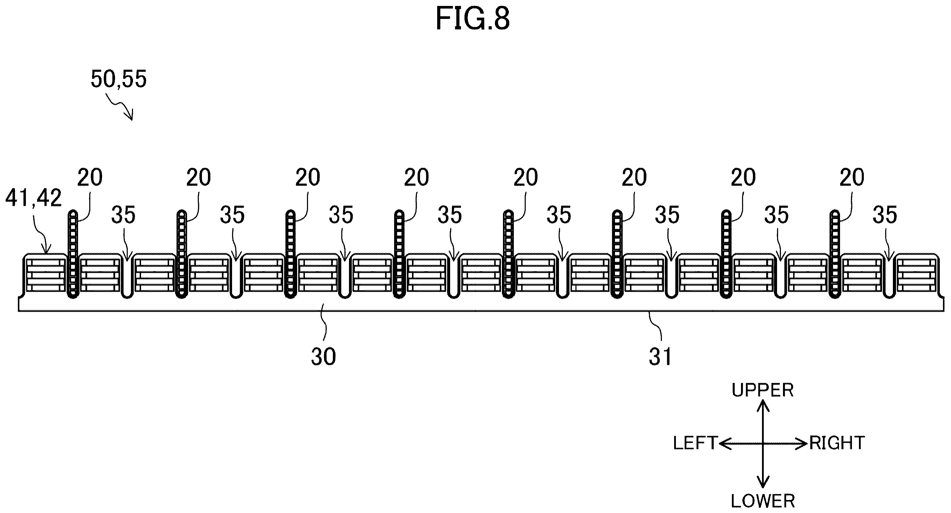

As a result, as shown in FIGS. 7 and 8, the first fin group (41) and the flat tubes (20) are assembled into the first assembly (50). At the point in time when the first step is completed, the first assembly (50) is oriented such that the continuous edges (31) of the fins (30) are located on the lower side thereof and the flat tubes (20) are located on the upper side thereof. In FIG. 7, the cut and raised portions (34) of the fins (30) are not shown.

The first assembly (50) formed in the first step has the slot rows (35) into each of which the corresponding flat tube (20) has been inserted, and the slot rows (35) into each of which no flat tube (20) is inserted. The former slot rows (35) and the latter slot rows (35) are alternately arranged in the longitudinal direction of the fins (30) that form the first fin group (41). Thus, each of the fins (30) that form the first fin group (41) has the slots (32) into each of which the corresponding flat tube (20) has been inserted, and the slots (32) into each of which no flat tube (20) is inserted. The former slots (32) and the latter slots (32) are alternately arranged in the longitudinal direction of the fin (30).

### <Inversion Step>

The inversion step is the step of inverting the orientation of the first assembly (50) formed in the first step.

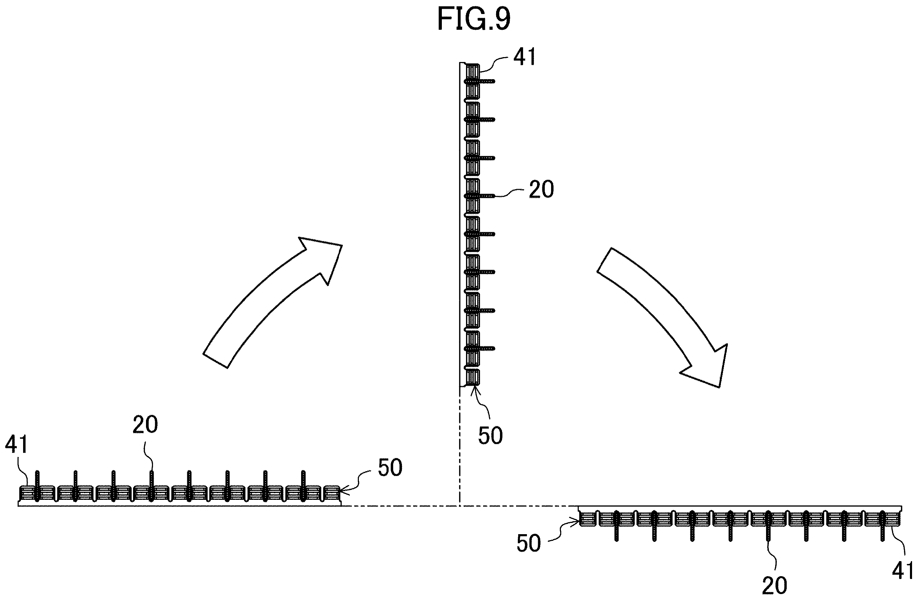

As described above, at the point in time when the first step is completed, the first assembly (50) is oriented such that the flat tubes (20) are located on the upper side thereof. As shown in FIG. 9, in the inversion step, the first assembly (50) is inverted from the orientation in which the flat tubes (20) are located on the upper side thereof to the orientation in which the flat tubes (20) are located on the lower side thereof. In the inversion step, the first assembly (50) is held by an arm-shaped member (not shown), which is rotated 180° to invert the orientation of the first assembly (50).

### <Second Step>

The second step is the step of assembling the second fin group (42) and the flat tubes (20) into a second assembly (55).

As shown in FIG. 5, in the second step, all of the fins (30) that form the second fin group (42) face, and are spaced apart from each other at regular intervals. In FIG. 5, the cut and raised portions (34) of the fins (30) are not shown. The fins (30) are oriented such that their continuous edges (31) face downward, and the open ends (33) of their slots (32) face upward. The fins (30) are arranged such that corresponding ones of the slots (32) are aligned in the direction of arrangement of the fins (30). The fins (30) that form the second fin group (42) are surrounded by a frame-shaped or tray-shaped member to maintain the orientation shown in FIG. 5.

In the second fin group (42) in the state shown in FIG. 5, the aligned slots (32) of the fins (30) form a slot row (35). The number of slot rows (35) of the second fin group (42) in this state is the same as the number of slots (32) in each fin (30).

In the second step, some of the flat tubes (20) that form the heat exchanger (10) are assembled with the second fin group (42). In the second step of this embodiment, the remaining half which have not been assembled with the first fin group (41) in the first step among the flat tubes (20) which form the heat exchanger (10) are assembled with the second fin group (42). Thus, the sum of the number of flat tubes (20) assembled with the first fin group (41) in the first step and the number of flat tubes (20) assembled with the second fin group (42) in the second step agrees with the number of the flat tubes (20) that form the heat exchanger (10).

As illustrated in FIG. 6, in the second step, the flat tubes (20) are inserted into every other one of the slot rows (35) arranged in the longitudinal direction of the fins (30). In the second step, the flat tubes (20) are inserted into some of the slot rows (35) of the second fin group (42). Thus, in the second step, the flat tubes (20) are inserted into some of the slots (32) of each of the fins (30) that form the second fin group (42).

The flat tubes (20) are each inserted downward from above into corresponding ones of the slots (32) that form the corresponding slot row (35) such that the width direction of the flat tubes (20) generally coincides with the vertical direction and the direction of extension of the flat tubes (20) is along the direction of arrangement of the fins (30).

As a result, as shown in FIGS. 7 and 8, the second fin group (42) and the flat tubes (20) are assembled into the second assembly (55). At the point in time when the second step is completed, the second assembly (55) is oriented such that the continuous edges (31) of the fins (30) are located on the lower side thereof and the flat tubes (20) are located on the upper side thereof. In FIG. 7, the cut and raised portions (34) of the fins (30) are not shown.

The second assembly (55) formed in the second step has the slot rows (35) into each of which the corresponding flat tube (20) has been inserted, and the slot rows (35) into each of which no flat tube (20) is inserted. The former slot rows (35) and the latter slot rows (35) are alternately arranged in the longitudinal direction of the fins (30) that form the second fin group (42). Thus, each of the fins (30) that form the second fin group (42) has the slots (32) into each of which the corresponding flat tube (20) has been inserted, and the slots (32) into each of which no flat tube (20) is inserted. The former slots (32) and the latter slots (32) are alternately arranged in the longitudinal direction of the fin (30).

In the second step, the flat tubes (20) are inserted into some of the slot rows (35) of the second fin group (42) corresponding to "the slot rows (35) of the first fin group (41) into each of which no flat tube (20) is inserted." Thus, in the second step, the flat tubes (20) are inserted into some of the slots (32) of the fins (30) which form the second fin group (42) which correspond to "the slots (32) of the fins (30) which form the first fin group (41) into each of which no flat tube (20) is inserted."

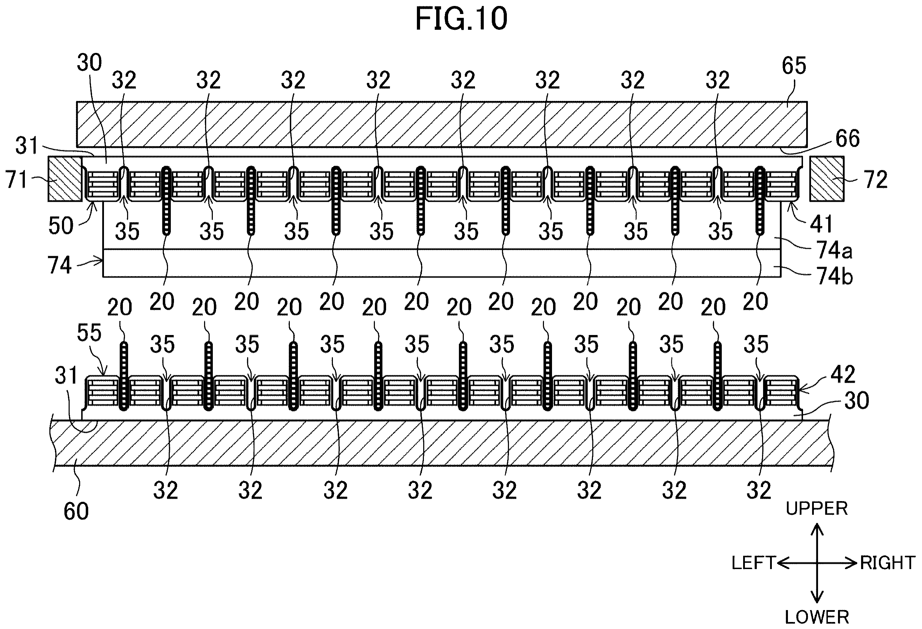

The slot rows (35) of the second fin group (42) into each of which the corresponding flat tube (20) is inserted in the second step are located on the opposite side of "the slot rows (35) of the first assembly (50) into each of which no flat tube (20) is inserted" in a state where the second fin group (42) is oriented to face the first assembly (50) (e.g., in the state shown in FIG. 10). Thus, "the slots (32) of each of the fins (30) which form the second fin group (42)" into each of which the corresponding flat tube (20) is inserted in the second step are located on the opposite side of "the slots (32) of each of the fins (30) which form the first assembly (50) into each of which no flat tube (20) is inserted" in a state where the second fin group (42) is oriented to face the first assembly (50) (e.g., in the state shown in FIG. 10).

### <Third Step>

The third step is the step of assembling the first assembly (50) and the second assembly (55) into the core (15). In the third step, the correction step of correcting a deflection in the first assembly (50) is conducted, and the first assembly (50) in which the deflection has been corrected is assembled with the second assembly (55).

### [Arrangement of Second Assembly]

As shown in FIG. 10, in the third step, the second assembly (55) is placed on a flat-plate-shaped base member (60) such that the flat tubes (20) thereof face upward. The continuous edges (31) of the fins (30) of the second fin group (42) forming the second assembly (55) are in contact with the upper surface of the base member (60). The second assembly (55) is held in a predetermined position on the base member (60) by a member (not shown).

### [Arrangement of First Assembly]

As shown in FIG. 10, in the third step, the first assembly (50) that has undergone the inversion step is disposed over the second assembly (55). The first assembly (50) is disposed over the second assembly (55) such that the flat tubes (20) thereof are located on the lower side thereof.

In this state, the flat tubes (20) of the first assembly (50) face the respective slot rows (35) of the second fin group (42) that forms the second assembly (55). Specifically speaking, the flat tubes (20) of the first assembly (50) are located on the opposite side of the "slot rows (35) of the second assembly (55) into each of which no flat tube (20) has been inserted."

The flat tubes (20) of the second assembly (55) face the respective slot rows (35) of the first fin group (41) that forms the first assembly (50). Specifically speaking, the flat tubes (20) of the second assembly (55) are located on the opposite side of the "slot rows (35) of the first assembly (50) into each of which no flat tube (20) has been inserted."

As described above, in the third step, the first assembly (50) is oriented such that the flat tubes (20) of the first assembly (50) face the second assembly (55), and the second assembly (55) is oriented such that the flat tubes (20) of the second assembly (55) face the first assembly (50).

### [Pressing Member]

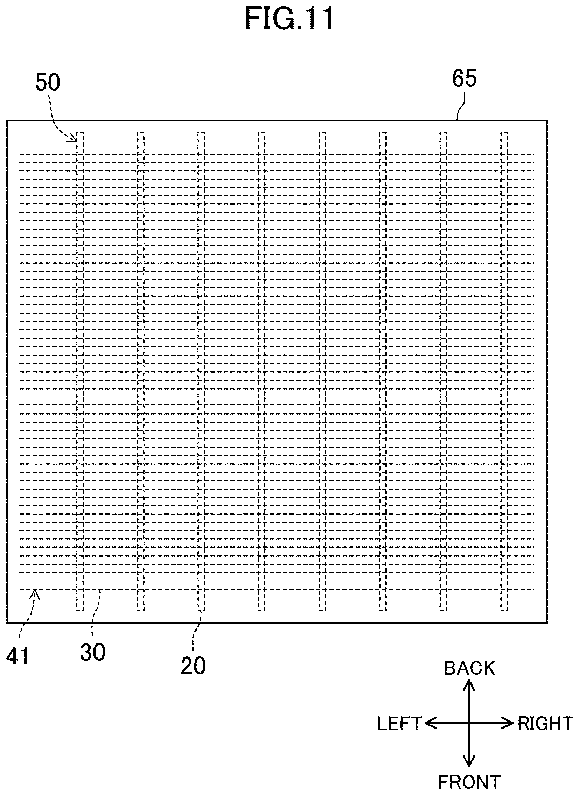

In the third step, the first assembly (50) is disposed under the pressing member (65). As shown in FIG. 11, the pressing member (65) is a flat-plate-shaped member that covers the entire first assembly (50) when viewed from above. The lower surface of the pressing member (65) is a flat pressing surface (66). The pressing surface (66) faces the continuous edges (31) of the fins (30) that form the first fin group (41) of the first assembly (50) (see FIG. 10).

### [Clamping Member]

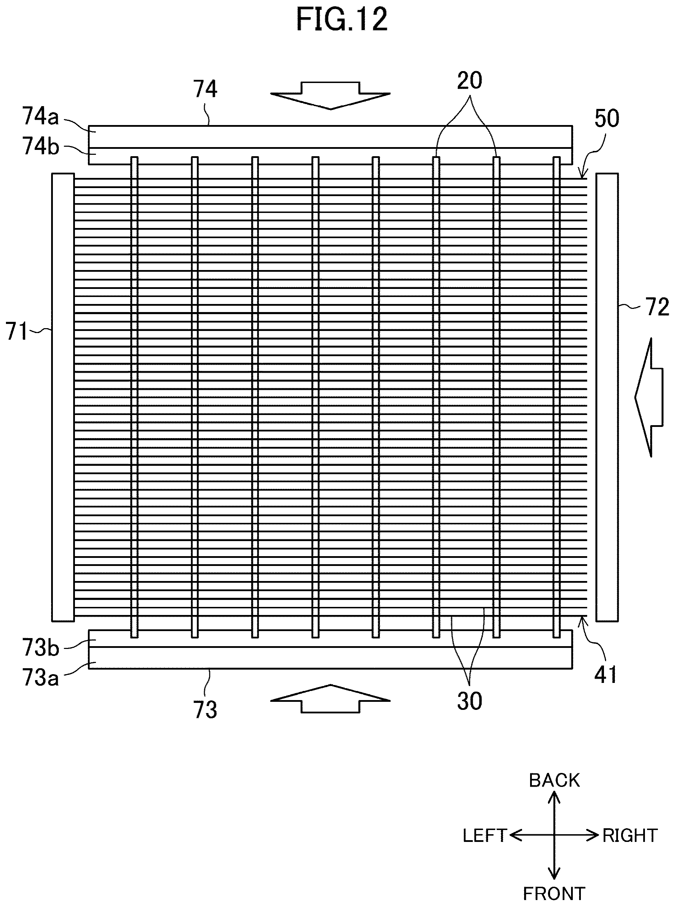

As shown in FIG. 12, in the third step, the first assembly (50) is surrounded by four clamping members (71 to 74). In the first assembly (50), one ends of the fins (30) that form the first fin group (41) face the first clamping member (71), and the other ends of the fins (30) face the second clamping member (72). In the first assembly (50), one end surfaces of the flat tubes (20) face the third clamping member (73), and the other end surfaces of the flat tubes (20) face the fourth clamping member (74).

The first clamping member (71) and the second clamping member (72) are elongated members extending in the horizontal direction. The first clamping member (71) and the second clamping member (72) each have a substantially vertical surface that faces the first assembly (50).

In FIGS. 10 and 12, the first clamping member (71) is disposed on the left side of the first assembly (50), and faces the left ends of the fins (30) that form the first fin group (41). In FIGS. 10 and 12, the second clamping member (72) is disposed on the right side of the first assembly (50), and faces the right ends of the fins (30) that form the first fin group (41).

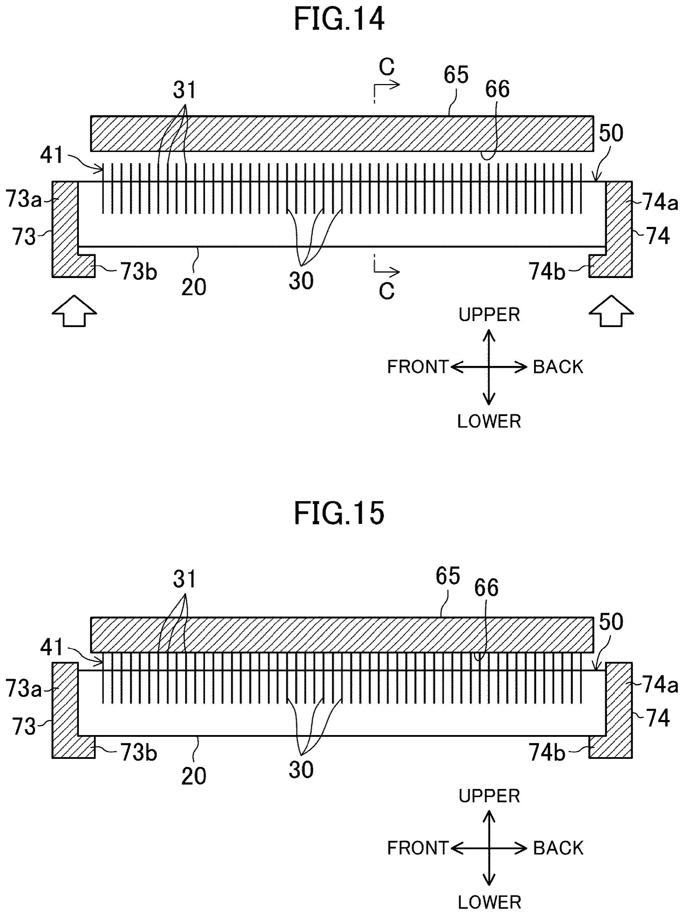

The third clamping member (73) and the fourth clamping member (74) are elongated members extending in the horizontal direction. As shown also in FIG. 14, the third clamping member (73) and the fourth clamping member (74) each include a clamping portion (73a, 74a) and a supporting portion (73b, 74b). The clamping portions (73a, 74a) each have a substantially vertical surface that faces the first assembly (50). The supporting portions (73b, 74b) protrude from the respective clamping portions (73a, 74a) toward the first assembly (50). The upper surface of the supporting portion (73b, 74b) is a substantially horizontal surface.

In FIG. 12, the third clamping member (73) is disposed on the front side of the first assembly (50). The clamping portion (73a) of the third clamping member (73) faces end surfaces of the flat tubes (20), and the supporting portion (73b) is located below end portions of the flat tubes (20) (see FIG. 14). In FIG. 12, the fourth clamping member (74) is disposed on the back side of the first assembly (50). The clamping portion (74a) of the fourth clamping member (74) faces end surfaces of the flat tubes (20), and the supporting portion (74b) is located below end portions of the flat tubes (20) (see FIG. 14).

### [First Correction Step]

The first correction step is the step of correcting a horizontal deflection in the first assembly (50) oriented such that the flat tubes (20) are located on the lower side thereof.

Here, in the first assembly (50), the flat tubes (20) inserted into the respective slot rows (35) of the first fin group (41) are held on the first fin group (41) by frictional force. Thus, relatively displacing the first fin group (41) and the flat tubes (20) may cause a horizontal deflection in the first assembly (50). To address this problem, in the first correction step, the horizontal deflection in the first assembly (50) is corrected.

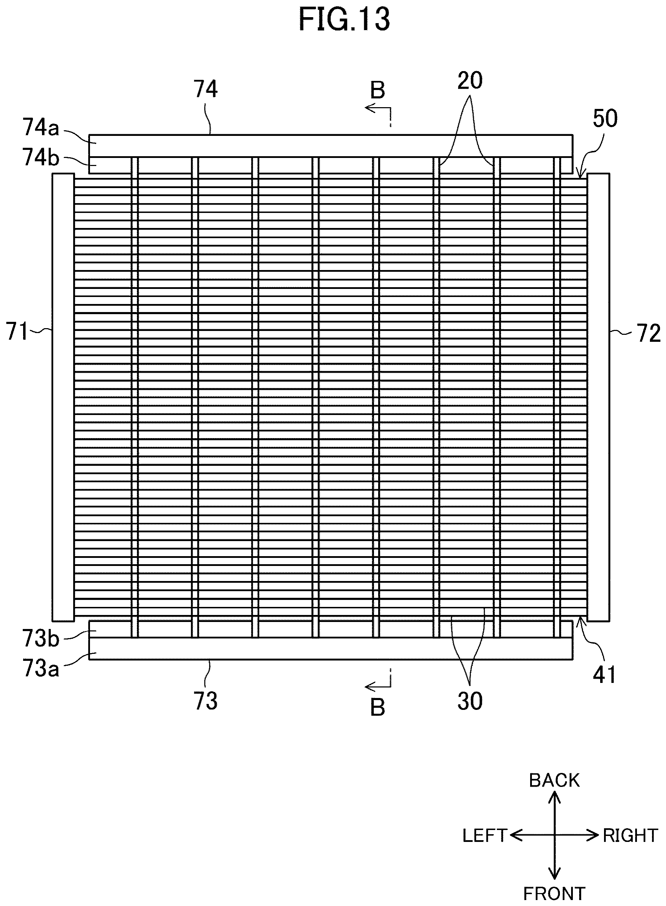

As shown in FIG. 12, in the first correction step, the second clamping member (72) is pressed against the first assembly (50). As a result, as shown in FIG. 13, the first assembly (50) is clamped from both left and right sides thereof in FIG. 13 by the first clamping member (71) and the second clamping member (72). As can be seen, the first assembly (50) is clamped from both sides thereof in the direction of arrangement of the flat tubes (20) (in other words, in the longitudinal direction of the fins (30)) by the first clamping member (71) and the second clamping member (72). In FIGS. 12 and 13, the pressing member (65) is not shown.

As shown in FIG. 12, in the first correction step, the third clamping member (73) and the fourth clamping member (74) are pressed against the first assembly (50). As a result, as shown in FIG. 13, the first assembly (50) is clamped from both front and back sides thereof in FIG. 13 by the third clamping member (73) and the fourth clamping member (74). As can be seen, the first assembly (50) is clamped from both sides thereof in the direction of arrangement of the fins (30) (in other words, in the direction of extension of the flat tubes (20)) by the third clamping member (73) and the fourth clamping member (74).

In the first correction step, the first assembly (50) oriented such that the flat tubes (20) are located on the lower side thereof is clamped from both sides thereof in the direction of arrangement of the flat tubes (20) by the first clamping member (71) and the second clamping member (72), and is clamped from both sides thereof in the direction of arrangement of the fins (30) by the third clamping member (73) and the fourth clamping member (74). As a result, a horizontal deflection in the first assembly (50) oriented such that the flat tubes (20) are located on the lower side thereof is corrected.

### [Second Correction Step]

The second correction step is the step of correcting a vertical deflection in the first assembly (50) oriented such that the flat tubes (20) are located on the lower side thereof.

Here, the fins (30) elastically deformed may cause the first assembly (50) oriented such that the flat tubes (20) are located on the lower side thereof to be curved such that a portion of the first assembly (50) around the center thereof in the direction of arrangement of the flat tubes (20) (in the lateral direction in FIG. 10) is lowered. Alternatively, the first assembly (50) oriented such that the flat tubes (20) are located on the lower side thereof may be curved upward.

The first assembly (50) curved causes the width direction of the flat tubes (20) to tilt in the vertical direction. As a result, the flat tubes (20) of the first assembly (50) can no longer be inserted straight from above into the respective slot rows (35) of the second fin group (42), which may cause the fins (30) of the second fin group (42) to be crushed. The first assembly (50) curved causes the direction of extension of the slots (32) of the fins (30) that form the first fin group (41) to tilt in the vertical direction. As a result, the flat tubes (20) of the second assembly (55) can no longer be inserted straight from below into the respective slot rows (35) of the first fin group (41), which may cause the fins (30) of the first fin group (41) to be crushed. To address this problem, in the second correction step, a vertical deflection in the first assembly (50) is corrected.

As shown in FIG. 14, in the second correction step, the third clamping member (73) and the fourth clamping member (74) move upward, and the upper surfaces of the supporting portions (73b, 74b) are in contact with the end portions of the flat tubes (20). As shown in FIG. 15, the first assembly (50) clamped in the horizontal direction by the four clamping members (71 to 74) is lifted by the third clamping member (73) and the fourth clamping member (74), and is pressed against the pressing surface (66) of the pressing member (65). The pressing surface (66) of the pressing member (65) is a flat horizontal surface. For this reason, when the first assembly (50) is pressed against the pressing member (65), the continuous edges (31) of the fins (30) that form the first fin group (41) are straightened along the pressing surface (66). Thus, the vertical deflection in the first assembly (50) is corrected.

### [Assembly of First Assembly and Second Assembly]

The first assembly (50) is assembled with the second assembly (55) with the horizontal and vertical deflections corrected.

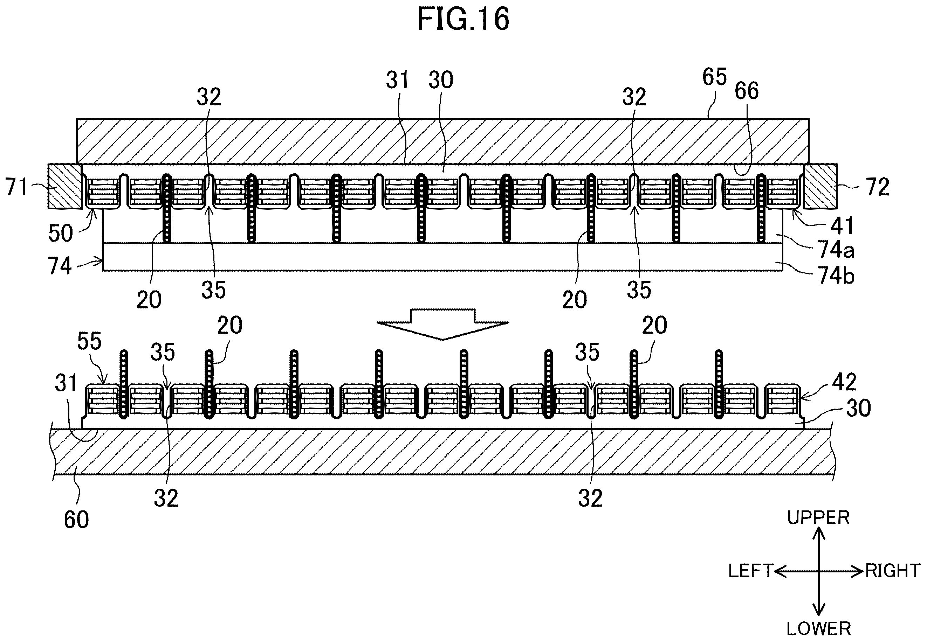

As shown in FIG. 16, the first assembly (50) is clamped in the horizontal direction by the four clamping members (71 to 74), and moves downward while being pressed against the pressing surface (66) of the pressing member (65).

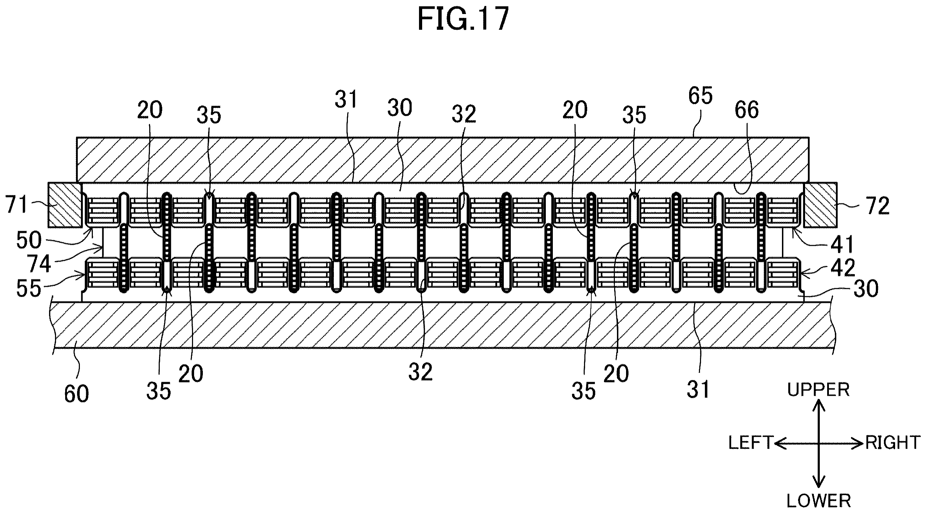

When the first assembly (50) moves downward, lower portions of the flat tubes (20) of the first assembly (50) enter the respective slot rows (35) of the second fin group (42) forming the second assembly (55), as shown in FIG. 17. Upper portions of the flat tubes (20) of the second assembly (55) enter the respective slot rows (35) of the first fin group (41) forming the first assembly (50).

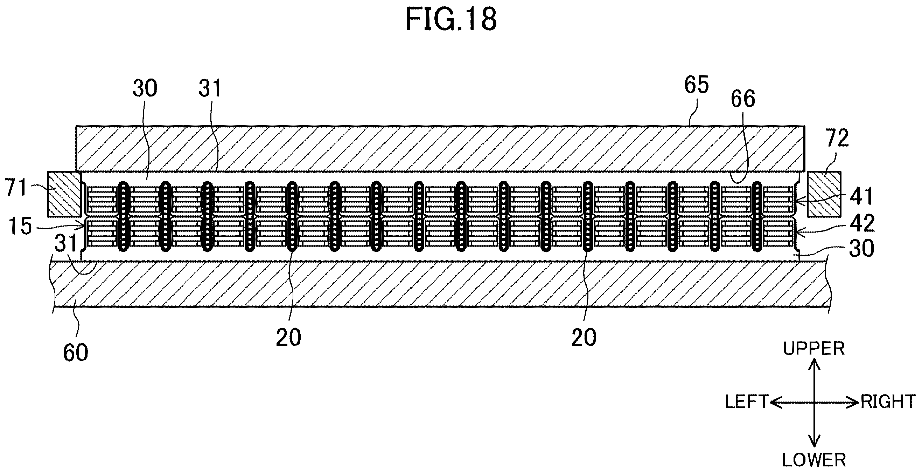

Thereafter, the first assembly (50) is further pushed downward by the pressing member (65). As a result, the flat tubes (20) of the first assembly (50) enter the respective slot rows (35) of the second fin group (42) forming the second assembly (55), and the flat tubes (20) of the second assembly (55) enter the respective slot rows (35) of the first fin group (41) forming the first assembly (50), as shown in FIG. 18. In this manner, the first assembly (50) and the second assembly (55) are assembled together to form the core (15) including the flat tubes (20), the first fin group (41), and the second fin group (42).

### -Feature (1) of Embodiment-

In the method for manufacturing a heat exchanger (10) of this embodiment, the first step, the second step, and the third step are conducted.

In the first step, the first fin group (41) and the flat tubes (20) are assembled into the first assembly (50). In the second step, the second fin group (42) and the flat tubes (20) are assembled into the second assembly (55).

In the third step, bringing the first assembly (50) and the second assembly (55) closer to each other allows the flat tubes (20) of the first assembly (50) to be inserted into the respective slot rows (35) of the second fin group (42), and allows the flat tubes (20) of the second assembly (55) to be inserted into the respective slot rows (35) of the first fin group (41). As a result, the flat tubes (20), the first fin group (41), and the second fin group (42) are assembled together.

In the first assembly (50) formed in the first step, the relative positions of the fins (30) that form the first fin group (41) are maintained by the flat tubes (20) inserted into the respective slot rows (35) of the first fin group (41). In the second assembly (55) formed in the second step, the relative positions of the fins (30) that form the second fin group (42) are maintained by the flat tubes (20) inserted into the respective slot rows (35) of the second fin group (42).

Thus, in the manufacturing method of this embodiment, handling, such as transportation, of the first fin group (41) and the second fin group (42) and the operation of assembling the first assembly (50) and the second assembly (55) together in the third step can be easily conducted while the relative positions of the fins (30) that form each of the first fin group (41) and the second fin group (42) are maintained.

### -Feature (2) of Embodiment-

In the third step of the manufacturing method of this embodiment, the second assembly (55) is disposed on the base member (60), and the first assembly (50) disposed over the second assembly (55) is pushed downward by the pressing member (65), thereby assembling the first assembly (50) and the second assembly (55) together. In the third step, the continuous edges (31) of the fins (30) that form the second fin group (42) of the second assembly (55) are in contact with the flat upper surface of the base member (60). This prevents the second assembly (55) placed on the base member (60) from being vertically deflected.

As can be seen, in the third step of the manufacturing method of this embodiment, the second assembly (55) that has not been vertically deflected is installed, and the first assembly (50) is brought closer to the second assembly (55), thereby assembling the first assembly (50) and the second assembly (55) together. Thus, according to this embodiment, the step of assembling the first assembly (50) and the second assembly (55) together can be reliably conducted, thereby reducing the possibility of trouble, such as damage to the fins (30), during the process of manufacturing a heat exchanger (10).

### -Feature (3) of Embodiment-

In the third step of the manufacturing method of this embodiment, the correction step of correcting a deflection in the first assembly (50) is conducted, and the first assembly (50) in which the deflection has been corrected is assembled with the second assembly (55).

Here, when the first assembly (50) is deflected, the relative positions of the flat tubes (20) that form the first assembly (50) change from the normal position thereof in a state where the first assembly (50) is not deflected. Thus, when the first assembly (50) is deflected, the flat tubes (20) of the first assembly (50) cannot be accurately positioned over the respective slot rows (35) of the second fin group (42) forming the second assembly (55).

When the first assembly (50) is deflected, the relative positions of "the slot rows (35) of the first fin group (41) which forms part of the first assembly (50) into each of which no flat tube (20) has been inserted" change from the normal position thereof in a state where the first assembly (50) is not deflected. Thus, when the first assembly (50) is deflected, "the slot rows (35) of the first fin group (41) which forms part of the first assembly (50) into which no flat tube (20) has been inserted" cannot be accurately positioned over the respective flat tubes (20) of the second assembly (55).

For this reason, assembling the deflected first assembly (50) with the second assembly (55) prevents the flat tubes (20) of the first assembly (50) from being inserted straight from above into the respective slot rows (35) of the second fin group (42). As a result, the fins (30) of the second fin group (42) may be crushed by the flat tubes (20) of the first assembly (50). Assembling the deflected first assembly (50) with the second assembly (55) prevents the flat tubes (20) of the second assembly (55) from being inserted straight from below into the respective slot rows (35) of the first fin group (41). As a result, the fins (30) of the first fin group (41) may be crushed by the flat tubes (20) of the second assembly (55).

To address this problem, in the third step of the manufacturing method of this embodiment, the first assembly (50) in which a deflection has been corrected is assembled with the second assembly (55). This allows the flat tubes (20) of the first assembly (50) to be inserted straight from above into the respective slot rows (35) of the second fin group (42). In addition, the flat tubes (20) of the second assembly (55) can be inserted straight from below into the respective slot rows (35) of the first fin group (41).

Thus, when the first assembly (50) is to be assembled with the second assembly (55), the manufacturing method of this embodiment can reduce the possibility that the fins (30) of the first fin group (41) are crushed by the flat tubes (20) of the second assembly (55) and the possibility that the fins (30) of the second fin group (42) are crushed by the flat tubes (20) of the first assembly (50).

In particular, in the correction step of the manufacturing method of this embodiment, a horizontal deflection in the first assembly (50) oriented such that the flat tubes (20) are located on the lower side thereof is corrected in the first correction step, and a vertical deflection in the first assembly (50) oriented such that the flat tubes (20) are located on the lower side thereof is corrected in the second correction step. For this reason, in the third step of the manufacturing method of this embodiment, the first assembly (50) in which the horizontal and vertical deflections have been corrected can be assembled with the second assembly (55).

Thus, when the first assembly (50) is to be assembled with the second assembly (55), this embodiment can reliably reduce the possibility that the fins (30) of the first fin group (41) may be crushed by the flat tubes (20) of the second assembly (55) and the possibility that the fins (30) of the second fin group (42) may be crushed by the flat tubes (20) of the first assembly (50).

### -Variations of Embodiment-

The method for manufacturing a heat exchanger (10) according to this embodiment can be modified into the following variations.

### <First Variation>

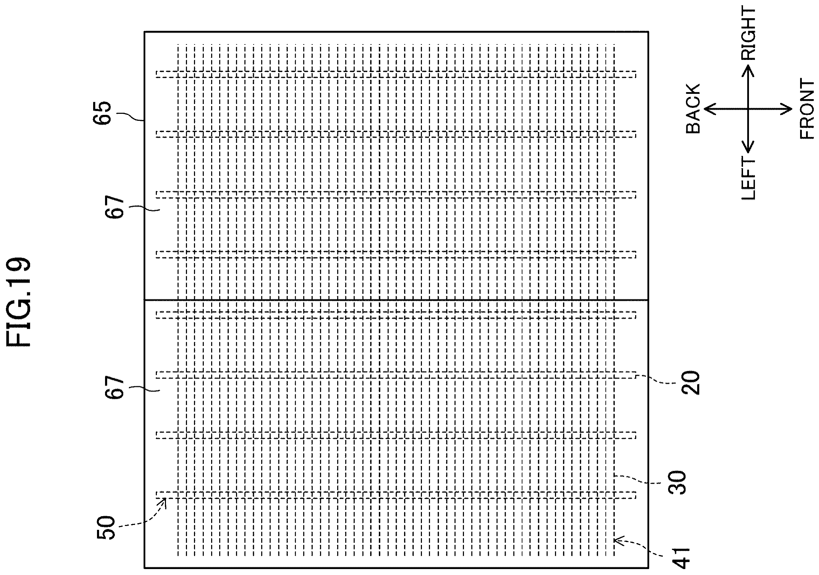

As shown in FIG. 19, the pressing member (65) for use in the third step may include multiple pressing blocks (67). The pressing member (65) shown in FIG. 19 includes two pressing blocks (67). The two pressing blocks (67) each have a lower surface that forms a flat pressing surface (66). The two pressing blocks (67) are arranged side by side in the direction of arrangement of the flat tubes (20) of the first assembly (50) (in the lateral direction in FIG. 19).

The pressing surface (66) of the pressing member (65) is larger than a heat exchanger (10) to be manufactured. Thus, if a large heat exchanger (10) is to be manufactured, and the pressing member (65) configured as a single member is used, the large pressing member (65) needs to be sufficiently rigid. This may increase the weight of the pressing member (65). To address this problem, the pressing member (65) including the pressing blocks (67) as described in this variation allows the weight of each of the pressing blocks (67) to be reduced while maintaining the rigidity of the pressing blocks (67). This makes it possible to reduce the weight of the entire pressing member (65).

### <Second Variation>

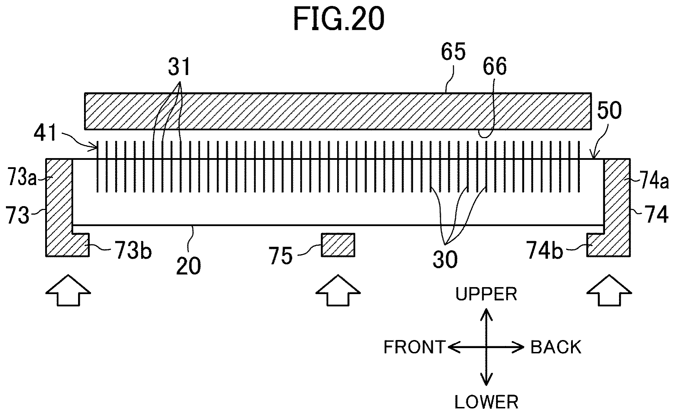

As shown in FIG. 20, in the second correction step, the first assembly (50) may be pressed against the pressing member (65) by the third clamping member (73), the fourth clamping member (74), and an intermediate support (75). The intermediate support (75) extends in a direction orthogonal to the direction of extension of the flat tubes (20) that form the first assembly (50) (the forward/backward direction in FIG. 20). The intermediate support (75) abuts against central portions of the flat tubes (20) that form the first assembly (50) in the direction of extension of the flat tubes (20). The intermediate support (75) moves upward in conjunction with the third clamping member (73) and the fourth clamping member (74), and lifts the first assembly (50) together with the third clamping member (73) and the fourth clamping member (74).

If the flat tubes (20) are long, the flat tubes (20) may be curved enough to be unignorable while the first assembly (50) is oriented such that the flat tubes (20) are located on the lower side thereof. In this case, if the end portions of the flat tubes (20) are supported by the third clamping member (73) and the fourth clamping member (74), and the central portions of the flat tubes (20) in the direction of extension of the flat tubes (20) are supported by the intermediate support (75), the flat tubes (20) can be corrected so as to be straight in the second correction step. As a result, even if the flat tubes (20) are long, a vertical deflection in the first assembly (50) oriented such that the flat tubes (20) are located on the lower side thereof can be reliably corrected.

### <Third Variation>

In the method for manufacturing a heat exchanger (10) of this embodiment, the arrangement of the flat tubes (20) of each of the first assembly (50) and the second assembly (55) and the slot rows (35) of the assembly into each of which no flat tube (20) is inserted is not limited to the arrangement shown in FIG. 10.

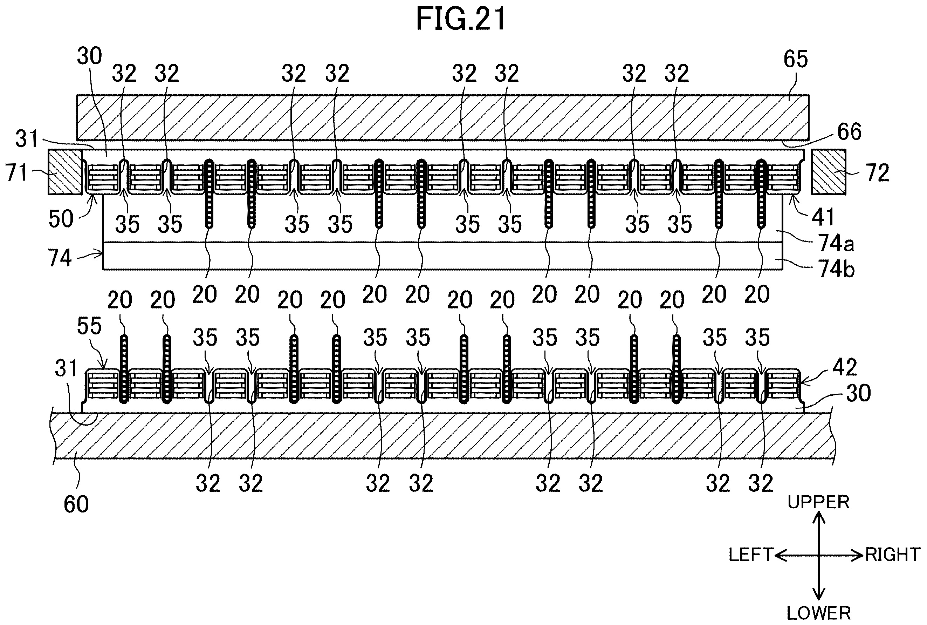

For example, as shown in FIG. 21, in the first step, two of the flat tubes (20) may be inserted into every other two of the slot rows (35) arranged in the longitudinal direction of the fins (30) that form the first fin group (41). In the second step, two of the flat tubes (20) may be inserted into every other two of the slot rows (35) arranged in the longitudinal direction of the fins (30) that form the second fin group (42).

### <Fourth Variation>

In the third step, the second assembly (55) disposed under the first assembly (50) may be moved upward to assemble the first assembly (50) and the second assembly (55) into the core (15). In the third step, while the first assembly (50) is moved downward, the second assembly (55) may be moved upward to assemble the first assembly (50) and the second assembly (55) into the core (15). As can be seen, in the third step of this embodiment, the first assembly (50) and the second assembly (55) disposed under the first assembly (50) are brought relatively closer to each other, thereby assembling the first assembly (50) and the second assembly (55) together.

### <Fifth Variation>

In the method for manufacturing a heat exchanger (10) of this embodiment, the orientations of the first assembly (50) and the second assembly (55) in the step of assembling the first assembly (50) and the second assembly (55) into the core (15) are merely examples. For example, the first assembly (50) and the second assembly (55) may be oriented such that the direction of extension of their flat tubes (20) coincides with the vertical direction, and either or both of the first assembly (50) and the second assembly (55) may be moved in the transverse direction to assemble the first assembly (50) and the second assembly (55) together.

### <Sixth Variation>

In the method for manufacturing a heat exchanger (10) of this embodiment, the correction step may include a third correction step of correcting a horizontal deflection in the second assembly (55).

In the third correction step, four clamping members are arranged to surround the second assembly (55) placed on the base member (60). The shape and arrangement of these clamping members are similar to those of the clamping members (71 to 74) for use in the first correction step. In the third correction step, the second assembly (55) is clamped from both sides thereof in the direction of arrangement of the flat tubes (20) and from both sides thereof in the direction of arrangement of the fins (30). As a result, a horizontal deflection in the second assembly (55) placed on the base member (60) is corrected.

### <Seventh Variation>

In the method for manufacturing a heat exchanger (10) of this embodiment, the number of flat tubes (20) that form part of the first assembly (50) may be the same as, or different from, the number of flat tubes (20) that form part of the second assembly (55). If the number of flat tubes (20) that form part of the heat exchanger (10) is an even number, the number of flat tubes (20) that form part of the first assembly (50) is desirably the same as the number of flat tubes (20) that form part of the second assembly (55). If the number of flat tubes (20) that form part of the heat exchanger (10) is an odd number, either the number of flat tubes (20) that form part of the first assembly (50) or the number of flat tubes (20) that form part of the second assembly (55) is desirably one greater than the other number.

While the embodiments and variations thereof have been described above, it will be understood that various changes in form and details may be made without departing from the spirit and scope of the claims. The elements according to the embodiments, the variations thereof, and the other embodiments may be combined and replaced with each other. In addition, the expressions of "first," "second," "third," . . . , in the specification and claims are used to distinguish the terms to which these expressions are given, and do not limit the number and order of the terms.

### INDUSTRIAL APPLICABILITY

As can be seen from the foregoing description, the present disclosure is useful for a method for manufacturing a heat exchanger.

### DESCRIPTION OF REFERENCE CHARACTERS

- 10: Heat Exchanger
- 20: Flat Tube
- 30: Fin
- 32: Slot
- 33: Open End
- 41: First Fin Group
- 42: Second Fin Group
- 50: First Assembly
- 55: Second Assembly
- 65: Pressing Member
- 66: Pressing Surface
- 67: Pressing Block

## Claims

1. A method for manufacturing a heat exchanger (10), the heat exchanger (10) including multiple flat tubes (20), and a first fin group (41) and a second fin group (42) that each include multiple plate-shaped fins (30), the fins (30) each having multiple slots (32) with open ends (33) at an edge of the fin (30), the flat tubes (20) being each inserted into corresponding ones of the slots (32) of the fins (30) that form the first fin group (41) and corresponding ones of the slots (32) of the fins (30) that form the second fin group (42), the method comprising:
a first step of inserting some of the flat tubes (20) into some corresponding ones of the slots (32) of the fins (30) that form the first fin group (41) to form a first assembly (50) including the first fin group (41) and the some of the flat tubes (20);
a second step of inserting other ones of the flat tubes (20) into some of the slots (32) of the fins (30) which form the second fin group (42) which correspond to the slots (32) of the first fin group (41) into each of which no flat tube (20) is inserted to form a second assembly (55) including the second fin group (42) and the other ones of the flat tubes (20); and
a third step of orienting the first assembly (50) such that the flat tubes (20) of the first assembly (50) face the second assembly (55), orienting the second assembly (55) such that the flat tubes (20) of the second assembly (55) face the first assembly (50), and pressing the first assembly (50) against the second assembly (55) to insert the flat tubes (20) of the first assembly (50) into the slots (32) of the fins (30) of the second assembly (55) and to insert the flat tubes (20) of the second assembly (55) into the slots (32) of the fins (30) of the first assembly (50).

2. The method of claim 1, wherein
in the first step, the flat tubes (20) are inserted into predetermined ones of the slots (32) of the fins (30) that form the first fin group (41) such that the slots (32) into each of which a corresponding one of the flat tubes (20) has been inserted and the slots (32) into each of which no flat tube (20) is inserted are alternately arranged, and
in the second step, the flat tubes (20) are inserted into predetermined ones of the slots (32) of the fins (30) that form the second fin group (42) such that the slots (32) into each of which a corresponding one of the flat tubes (20) has been inserted and the slots (32) into each of which no flat tube (20) is inserted are alternately arranged.

3. The method of claim 1 or 2, wherein
in the third step, the first assembly (50) is oriented such that the flat tubes (20) are located on a lower side of the first assembly (50), the second assembly (55) is oriented such that the flat tubes (20) are located on an upper side of the second assembly (55), and the first assembly (50) is moved downward to press the first assembly (50) against the second assembly (55).

4. The method of claim 3, wherein
in the third step, a pressing member (65) having a lower surface that forms a flat pressing surface (66) is used to bring the pressing surface (66) of the pressing member (65) into contact with upper edges of the fins (30) of the first assembly (50) oriented such that the flat tubes (20) are located on the lower side of the first assembly (50), and the first assembly (50) is thereby pushed downward by the pressing member (65) to press the first assembly (50) against the second assembly (55).

5. The method of claim 4, wherein
the pressing member (65) for use in the third step includes multiple pressing blocks (67) each having a lower surface that forms the pressing surface (66).

6. The method of claim 1 or 2, wherein
the third step includes a correction step of correcting a deflection in the first assembly (50) oriented such that the flat tubes (20) are located on a lower side of the first assembly (50), and
in the third step, the first assembly (50) in which a deflection has been corrected is pressed against the second assembly (55).

7. The method of claim 6, wherein
the correction step includes a first correction step of correcting a horizontal deflection in the first assembly (50) by clamping the first assembly (50) in a horizontal direction.

8. The method of claim 7, wherein
in the first correction step of the correction step, the first assembly (50) is clamped from both sides of the first assembly (50) in a direction of arrangement of the flat tubes (20), and is clamped from both sides of the first assembly (50) in a direction of arrangement of the fins (30).

9. The method of any one of claims 6 to 8, wherein
in the third step, a pressing member (65) having a lower surface that forms a flat pressing surface (66) is used to bring the pressing surface (66) of the pressing member (65) into contact with upper edges of the fins (30) of the first assembly (50) oriented such that the flat tubes (20) are located on the lower side of the first assembly (50), and the first assembly (50) is thereby pushed downward by the pressing member (65) to press the first assembly (50) against the second assembly (55), and
the correction step includes a second correction step of correcting a vertical deflection in the first assembly (50) by pressing the first assembly (50) against the pressing surface (66) of the pressing member (65).

10. The method of claim 9, wherein
in the second correction step of the correction step, both end portions of the flat tubes (20) of the first assembly (50) are lifted to press the first assembly (50) against the pressing surface (66) of the pressing member (65).

11. The method of claim 9, wherein
in the second correction step of the correction step, both end portions of the flat tubes (20) of the first assembly (50) and intermediate portions of the flat tubes (20) in a direction of extension of the flat tubes (20) are lifted to press the first assembly (50) against the pressing surface (66) of the pressing member (65).
